# EUROPÄISCHE PATENTSCHRIFT

(11) **EP 1 153 995 B1**
(45) Veröffentlichungstag und Bekanntmachung des Hinweises auf die Patenterteilung: **14.04.2004**
(21) Anmeldenummer: 01111124.2
(22) Anmeldetag: 09.05.2001
(51) Int. Cl.: C09D 17/00, C09D 5/36, C09D 11/02

(54) **Pigmentpräparation mit modifizierten Kolophoniumharzen**
Pigment preparation with modified rosin resins
Préparations pigmentaires avec des résines de colophane modifiées

(30) Priorität: 12.05.2000 DE 10023286
(43) Veröffentlichungstag der Anmeldung: 14.11.2001
(73) Patentinhaber: MERCK PATENT GmbH, 64293 Darmstadt (DE)
(72) Erfinder: Rathschlag, Thomas, 35781 Weilburg (DE); Griessmann, Carsten, 64846 Gross-Zimmern (DE); Schoen, Sabine, 64287 Darmstadt (DE); Sarfert, Werner, 27777 Ganderkesee (DE)

(56) Entgegenhaltungen:
- EP-A- 0 363 322
- EP-A- 0 528 602
- DE-A- 19 708 167
- DE-A- 19 813 394
- DE-A- 19 847 169

## Beschreibung

Die Erfindung betrifft eine nichtstaubende, homogene Pigmentpräparation, die sich dadurch auszeichnet, dass sie mindestens 40 Gew.% eines oder mehrerer Effektpigmente, 0,5 - 50 Gew.% Wasser und/oder eines organischen Lösemittels bzw. Lösemittelgemisches und 0,5 - 59,5 Gew.% eines modifizierten Kolophoniumharzes bezogen auf das Pigment enthält. Der-artige Pigmentpräparationen sind insbesondere geeignet zur Herstellung von Trockenpräparaten, wie z.B. Granulaten, Chips, Briketts, Pellets, etc. Die Erfindung betrifft weiterhin das Herstellverfahren der Pigmentpräparation sowie der Trockenpräparate und deren Verwendung zur Pigmentierung von Farben, Druckfarben, Lacken, etc., auf Wasser- und/oder Lösemittelbasis sowie von Kunststoffen.

Der Einsatz von Effektpigmenten in Formulierungen und Kunststoffen als trockene Pulver ist häufig mit Nachteilen wie Staubentwicklung und daraus resultierenden Problemen am Arbeitsplatz behaftet. Ein weiterer Nachteil ist, dass bei der Einarbeitung von Effektpigmenten in Kunststoffe, Druckfarben, Industrielacke, Basislacksysteme, etc., häufig eine Agglomeration des Pigmentpulvers beobachtet wird. Eine homogene Verteilung des Pigments in der jeweiligen Matrix ist häufig schwer oder aber gar nicht zu erreichen.

Um diese Nachteile zu vermeiden, werden anstelle des Pigmentpulvers nicht staubende Pigmentpräparationen bzw. pigmenthaltige Trockenpräparate, wie z. B. Granulate, verwendet. Durch die zusätzliche Behandlung der Pigmente mit einem Harz werden die anwendungstechnischen Eigenschaften der Pigmente verbessert. Für die Behandlung der Pigmente sind insbesondere modifizierte Kolophoniumharze geeignet.

Gute druckfarbentechnische Eigenschaften im Offset- bzw. Buchdruck zeigen staubfreie Pigmentpräparationen auf Basis von organischen Pigmenten, wie z. B. Azopigmenten, die mit einem Gemisch aus zwei unterschiedlichen Harzen, z.B. auf Basis von Kolophonium bzw. Kolophoniumderivaten, mit jeweils verschiedenen Säurezahlen belegt werden, wie aus der EP 0 897 956 A2 bekannt. Von Nachteil ist hier der Einsatz von zwei Belegharzen um die anwendungstechnischen Erfordernisse zu erfüllen.

Um wasserverdünnbare Druckfarben mit hohen Glanzwerten und guten lasierenden Eigenschaften auf Basis einer nichtstaubenden Pigmentpräparation herstellen zu können, werden in der EP 0 796 900 A2 Pigmentzubereitungen beschrieben, die auf Basis eines in einem wässrigen Medium suspendierten organischen Pigments und dessen Belegung mit einem (Kolophonium)-Harz mit einer Säurezahl von ≥ 200 mg KOH/g Harz und einem nichtionischen oberflächenaktiven Mittel beruhen. Als Nachteile müssen die Beschränkung auf fast ausschließlich wasserverdünnbare Druckfarben als auch die Verwendung zweier chemisch sehr unterschiedlicher Modifikationsmittel aus stark "sauren" (Kolophonium)-Harzen und Tensiden gesehen werden. Letzteres ist auch verantwortlich für die Verträglichkeitsprobleme dieser Pigmentzubereitung mit einer Vielzahl von Bindemittelsystemen. Ein weiterer Nachteil ist die Neigung zur Kristallisation der wässrigen Lösung dieser sauren Kolophoniumharze.

Neben einer guten Kompatibilität mit den weiteren Bestandteilen des Beschichtungssystems müssen Pigmentpräparationen bzw. die daraus hergestellten Trockenpräparate dazu führen, dass die Beschichtungssysteme eine hohe Stabilität aufweisen, d.h., sie dürfen nicht zur Phasenseparation neigen, bzw., wo dieses auf Grund der niedrigen Viskosität nicht vollständig zu verhindern ist, müssen die Beschichtungssysteme leicht wieder in einen homogenen Zustand versetzt werden können, d.h., das abgesetzte Sediment muss leicht wiederaufrührbar sein. Diese Forderung ist besonders wichtig bei Pigmentpräparationen auf der Basis plättchenförmiger Pigmente, da diese auf Grund ihrer Struktur bei der Phasenseparation zum "Zusammenbacken" neigen und nur schwer wieder aufgerührt werden können. Effektpigmente auf der Basis plättchenförmiger Substrate sind insofern problematisch in der Handhabung, als die Pigmente infolge ihrer Größe und ihrer Dichte sich leicht absetzen und dann zu einem sehr festen Sedimentkuchen zusammenbacken können. Dieser Kuchen ist in der Regel nur schwer wiederaufrührbar. Dies gilt vor allem bei der Lagerung von Lacken, Farben und Druckfarben, sowie bei der Verarbeitung derselben.

So wurden zahlreiche Methoden entwickelt um das Problem der Einarbeitung und Handhabung von plättchenförmigen Pigmenten in Beschichtungsmassen zu lösen. Das Wiederaufrühren kann erleichtert werden, indem den Beschichtungsmassen Additive zugesetzt werden, die entweder eine gezielte Flokkulation (Kartenhauseffekt), ein strukturviskoses und/oder thixotropes Verhalten, eine sterische Abstoßung und/oder eine elektrostatische Abstoßung der Pigmente untereinander bewirken. Diese Additive können jedoch einen negativen Einfluss auf die Qualität der Beschichtung haben. Insbesondere die Brillanz bei Effektpigmenten und die Gleichmäßigkeit der Beschichtung können beeinträchtigt werden. Weiterhin ist eine homogene, stabile Verteilung der Redispergiermittel im Perlglanzpigment-Pulver nur schwer zu erreichen, bzw. das Redispergiermittel verliert nach der Einbringung in das System an Wirksamkeit.

Die bisher zur Verwendung in Beschichtungssystemen entwickelten Zubereitungen mit Effektpigmenten mit einem Pigmentanteil > 30 Gew.% genügen den beschriebenen Anforderungen häufig nur unzureichend, insbesondere deshalb, da sie verstärkt zur Agglomeration und Scherverdickung neigen.

Die Aufgabe der vorliegenden Erfindung besteht daher in der Bereitstellung von oxidationsstabilen Pigmentpräparationen auf Basis von Effektpigmenten, die gleichzeitig sehr gut in lösemittelhaltigen und lösemittelfreien Beschichtungssystemen verwendet werden können, eine hohe Stabilität aufweisen, sich leicht redispergieren lassen und sich gleichzeitig durch eine hohe Kompatibilität mit den übrigen Komponenten des Beschichtungssystems auszeichnen. Weiterhin soll die erfindungsgemäße Pigmentpräparation auch zur Herstellung von Trockenpräparaten, z.B. in Form von Pellets, Chips, Briketts, Granulaten, etc., gut geeignet sein.

Überraschenderweise wurde nun gefunden, dass diese vielfältigen Anforderungen durch die Bereitstellung der erfindungsgemäßen Pigmentpräparation gelöst werden.

Gegenstand der Erfindung ist somit eine nichtstaubende, homogene Pigmentpräparation, die
- ≥ 40 Gew. % eines oder mehrerer Effektpigmente,
- 0,5 - 59,5 Gew. % eines modifizierten Kolophoniumharzes mit einer Säurezahl von 90 - 200 mg KOH/g Harz, einem Hydroxylgruppengehalt von 40 - 180 mg KOH / g Harz und einem Erweichungsbereich von 50 120 °C, und
- 0,5 - 50 Gew. % Wasser oder eines Lösemittels oder Lösemittelgemisches
bezogen auf die Pigmentpräparation enthält.

Die erfindungsgemäße Präparation ist in Abhängigkeit vom Feuchtegehalt eine fließfähige Paste bzw. ein angefeuchtetes, rieselfähiges Pulver. Beide sind sehr gut zur Herstellung von Trockenpräparaten, z.B. Granulaten, Chips, Pellets, Briketts, geeignet. Die aus der erfindungsgemäßen Pigmentpräparation hergestellten Trockenpräparate sind ebenfalls Gegenstand der Erfindung.

Die erfindungsgemäßen Produkte sind nicht staubend, gut rieselfähig, lassen sich schnell in kommerziell erhältliche Bindemittelsysteme einarbeiten und sind dort kompatibel. Insbesondere sind die Produkte sowohl kompatibel mit wässrigen, lösemittelhaltigen als auch lösemittelfreien Druckfarben- und Lacksystemen. Die über das Trockenpräparat, z.B. Granulat, hergestellten Farben und Lacke sind geeignet für den Tiefdruck, Flexodruck, Siebdruck, Offsetüberdrucklack (OPV = Overprint Varnish) sowie für die verschiedenen Lacksysteme auf dem Industrielack- und Automobillacksektor. Auch für Kunststoffeinfärbungen kommen sie in Betracht.

Die erfindungsgemäße Pigmentpräparation enthält vorzugsweise 40 - 98 Gew.% an Effektpigmenten, insbesondere 45 - 95 Gew.%. Ganz besonders bevorzugt sind Pigmentpräparationen mit einem Gehalt an Effektpigmenten von mehr als 50 Gew.%. Die Gew.%-Angaben beziehen sich immer auf die feuchte, d.h. nicht getrocknete Pigmentpräparation.

Als Effektpigmente werden Pigmente auf der Basis plättchenförmiger, transparenter oder semitransparenter Substrate aus z.B. Schichtsilikaten, wie etwa Glimmer, synthetischen Glimmer, SiO₂-, Glas-, TiO₂-, Al₂O₃-Plättchen, Talkum, Sericit, Kaolin, aus Glas oder anderen silikatischen Materialien verwendet, die mit seltenen Erdmetallsulfiden, wie z. B. Ce₂S₃, mit farbigen oder farblosen Metalloxiden, wie z. B. TiO₂, Titansuboxide, Titanoxinitride, Pseudobrookit, Fe₂O₃, Fe₃O₄, SnO₂, Cr₂O₃, ZnO, CuO, NiO und anderen Metalloxiden allein oder in Mischung in einer einheitlichen Schicht oder in aufeinanderfolgenden Schichten (Multilayerpigmente) belegt sind. Perlglanzpigmente sind z.B. aus den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017 und P 38 42 330 bekannt und im Handel erhältlich, z.B. unter der Marke Iriodin® der Fa. Merck KGaA, Darmstadt, Deutschland.

Besonders bevorzugte Pigmentpräparationen enthalten mit TiO₂, Fe₂O₃ oder TiO₂/Fe₂O₃ beschichtete Glimmer- oder SiO₂-Plättchen. Die Beschichtung der SiO₂-Plättchen kann z. B. erfolgen wie in der WO 93/08237 (nass-chemische Beschichtung) oder DE-OS 196 14 637 (CVD-Verfahren) beschrieben. Al₂O₃-Plättchen sind beispielsweise aus der EP 0 763 573 A1 bekannt. Plättchenförmige Substrate, die mit ein oder mehreren seltenen Erdmetallsulfiden belegt sind, werden z. B. in der DE OS 198 10 317 offenbart.

Weiterhin geeignet sind Metalleffektpigmente, insbesondere für wässrige und lösemittelhaltige Systeme modifizierte Aluminiumplättchen, wie sie von der Fa. Eckart unter der Marke Rotovario Aqua® oder Stapa Hydroxal® für wässrige Anwendungen vertrieben werden, sowie Variocrom®- und Paliocrom®-Pigmente der Fa. BASF, insbesondere auch solche aus den Offenlegungsschriften EP 0 681 009 A1, EP 0 632 110 A1, EP 0634 458 A1, sowie LCP-Pigmente (Liquid Crystal Polymers). Weiterhin geeignet sind ebenfalls alle dem Fachmann bekannten holographischen Pigmente sowie plättchenförmigen Pigmente, die Metallschichten aufweisen. Der-artige Pigmente werden von der Fa. Flex, Fa. BASF, der Fa. Eckart und der Fa. Schlenk vertrieben.

Die erfindungsgemäßen Pigmentpräparationen können ein oder mehrere Effektpigmente enthalten. Vielfach können durch die Verwendung von mindestens zwei verschiedenen Effektpigmenten besondere Farb- und Glanzeffekte erzielt werden. Bevorzugte Pigmentpräparationen enthalten ein oder mehrere Effektpigmente auf Basis von Glimmer- und/oder SiO₂-Plättchen. Weiterhin sind Abmischungen mit organischen und anorganischen Pigmenten bis zu 10 Gew.% bezogen auf die Pigmentpräparation möglich.

Insbesondere führt die Zugabe von ein oder mehreren Farbstoffen und/oder organischen Pigmenten in angeriebener Form zu speziellen Farbeffekten. Weiterhin können solche Substanzen und Partikel (tracer) zugesetzt werden, die eine Produktidentifizierung ermöglichen.

Als weitere Komponente enthält die erfindungsgemäße Pigmentpräparation ein modifiziertes Kolophoniumharz in Mengen von 0,5 - 59,5 Gew.%, vorzugsweise 5 - 40 Gew.%, insbesondere 10 - 30 Gew.%, bezogen auf die Pigmentpräparation.

Kolophonium wird aufgrund seiner unerwünschten Eigenschaften wie beispielsweise seiner schlechten Oxidations- und Vergilbungsbeständigkeit, seiner hohen Kristallisationsneigung nur in chemisch modifizierter Form eingesetzt. Dabei werden die in den Harzsäuren vorhandenen Carboxylgruppen und das konjugierte System der Doppelbindungen genutzt. Mit der Addition von α,β-ungesättigten Carbonylverbindungen lassen sich die Eigenschaften von Kolophoniumharzen steuern. Das dadurch gewonnene Addukt wird durch einen höheren Erweichungspunkt und eine höhere Säurezahl gekennzeichnet. Für Anwendungen, wie z.B. Druckfarben und Lacken, wird das Kolophonium mehrfach modifiziert, z.B. mit Maleinsäureanhydrid, Formaldehyd und danach durch Veresterung des gewonnenen Zwischenprodukts mit mehrwertigen Alkoholen. Andere Verfahren beruhen auf der Disproportionierung, Hydrierung und Dimerisation. Das disproportionierte und hydrierte Kolophonium wird durch eine sehr hohe Oxidationsstabilität gekennzeichnet, was dessen Nachdunkeln verhindert.

Die erfindungsgemäße Pigmentpräparation enthält vorzugsweise Kolophoniumharze, die Carboxylgruppen tragen, wie malein- und fumarsäuremodifizierte Kolophoniumharze. Insbesondere bevorzugt sind Kolophoniumharze, die ganz oder teilweise verestert sind.

Modifizierte Kolophoniumharze sind im Handel allgemein erhältlich und werden z.B. von der Fa. Kraemer unter den Marken Erkamar®, Bremazit®, Bremapal®, Bremasin®, Bremar® vertrieben.

Die Modifizierung von Kolophonium und die Herstellung von Harzen auf deren Basis ist allgemein bekannt und u.a. in folgenden Literaturstellen beschrieben:
- H. Kittel, Lehrbuch der Lacke und Beschichtungen" Hinzel Verlag 1998, Band 1, Abschnitte 1.4.1.1.6 und 1.4.2.1.1
- Ullmann's Encyclopedia of Industrial Chemistry, VCH 1993, Vol A 23, S. 84-85
- Gang-Fung Chen, "Developments in the field of rosin chemistry and its implications in coatings", Progress in Organic Coatings, 20 (1992), S. 139-167

Als Rohstoffe für die Herstellung von modifizierten Kolophoniumharzen finden üblicherweise Verwendung:
a) Naturharzsäuren wie Balsamharz, Tallharz und Wurzelharz, die gegebenenfalls ganz oder teilweise disproportioniert, hydriert oder dimerisiert sein können;
b) α, β-ethylenisch ungesättigte Carbonsäuren oder deren Anhydride, insbesondere Fumarsäure, Maleinsäure, Maleinsäureanhydrid, Itaconsäure, Acrylsäure, Methacrylsäure;
c) Hydroxylgruppen enthaltende Veresterungsmittel, vorzugsweise polyfunktionelle Alkohole, beispielsweise Glykole, Glycerin, Trimethylolpropan, Pentaerythritol;
d) Ethylenisch ungesättigte Kohlenwasserstoffharze, vorzugsweise Polymere oder Oligomere aus einfach und/oder mehrfach ethylenisch ungesättigten (C₅-C₉)-Kohlenwasserstoffen, welche insbesondere aus Cumaron-, Inden-, Cyclopentadien-, Dicyclopentadien- oder Isopren-Einheiten bestehen;
e) Kondensations-Katalysatoren, vorzugsweise Zinn-, Calcium-, Zinkoder Magnesiumverbindungen, wie Salze, Oxide, Hydroxide;
f) Fettsäuren, vorzugsweise pflanzliche, tierische und synthetische Fettsäuren, wie z.B. Capron-, Capryl-, Caprin-, Laurin-, Myristin-, Palmitin-, Stearin-, Öl-, Linolsäure sowie Fettsäuregemische.

Die Herstellung der modifizierten Kolophoniumharze erfolgt üblicherweise in mehreren Stufen. In der ersten Stufe können die Rohstoffe der Gruppen a) und/oder d) mit den Komponenten der Gruppe b) bei Temperaturen von 160 bis 230 °C umgesetzt werden. In einer zweiten Reaktionsstufe erfolgt dann die Umsetzung mit den Rohstoffen der Gruppe c) gegebenenfalls unter Zusatz von Katalysatoren aus der Gruppe e) und Rohstoffen aus der Gruppe f). Übliche Kondensationstemperaturen liegen im Bereich von 160 - 260 °C.

Diese Technologie und Temperaturführung ist jedoch nicht zwingend und kann, je nach Rohstoffauswahl und anzusteuernden Kennwertbereichen, in gewissen Teilen variieren.

Unabhängig vom Herstellverfahren und von der Rohstoffauswahl ist es aber entscheidend für die Wirksamkeit der modifizierten Kolophoniumharze in der erfindungsgemäßen Pigmentpräparation, dass folgende Kennwerte gleichzeitig erreicht sind:
- Säurezahl 90 - 200 mg KOH / g Harz, vorzugsweise 120 180 mg KOH / g Harz,
- Erweichungsbereich von 50 - 120 °C, vorzugsweise 60 - 100 °C, besonders bevorzugt 70 - 90 °C,
- Hydroxylgruppengehalt von 40 180 mg KOH / g Harz, vorzugsweise 80 140 mg KOH / g Harz.

Die Erweichungstemperatur wird überlicherweise gemessen mit der Kofler-Heizbank (6 Minuten-Wert).

Insbesondere bevorzugt sind modifizierte Kolophoniumharze, die folgende Kennzahlen gleichzeitig aufweisen:
- Säurezahl 90 - 200 mg KOH / g Harz, vorzugsweise 120 - 180 mg KOH / g Harz,
- Erweichungsbereich von 50 - 120 °C, vorzugsweise 60 - 100 °C, besonders bevorzugt 70 - 90 °C,
- Hydroxylgruppengehalt zwischen 40 - 180 mg KOH / g Harz, vorzugsweise 80 - 140 mg KOH / g Harz und
- lodzahl von ≤ 100 g lod / 100g Harz, vorzugsweise von ≤ 70 g lod / 100 g Harz.

Die Viskosität der modifizierten Kolophoniumharze beträgt in der Regel 20 - 80 s, vorzugsweise 25 - 45 s. Die Viskosität wird in der Regel gemessen als 65%ige Lösung in Ethanol bei 20 °C im 4mm DIN-Cup.

Durch das Einhalten der oben genannten Kennzahlen zeichnen sich die modifizierten Kolophoniumharze durch Eigenschaften aus, die sie dazu befähigen die erfindungsgemäße Pigmentpräparation herzustellen:
- Wasserlöslichkeit nach Neutralisation
- Oxidationsstabilität und UV-Resistenz
- Löslichkeit in Mono- und Oligomeren, Alkoholen, Estern, Aromaten und anderen dem Fachmann bekannten organischen Lösemitteln
- keine Neigung zur Kristallisation beispielsweise in wässriger und ethanolischer Lösung
- sehr gute Benetzungsfähigkeit von Effektpigmenten
- breite Verträglichkeit sowohl mit polaren als auch mit unpolaren handelsüblichen Bindemittelsystemen
- Erzielung einer hohen mechanischen Festigkeit der damit hergestellten Pigmentpräparationen, insbesondere der Trockenpräparate.

Die erfindungsgemäße Pigmentpräparation enthält weiterhin 0,5 bis 50 Gew.% an Wasser und/oder eines organischen Lösemittels bzw. Lösemittelgemi-sches, vorzugsweise 1 bis 45 Gew.%, insbesondere 1 bis 40 Gew.%, bezogen auf die Pigmentpräparation.

Die Lösemittelkomponente in der erfindungsgemäßen Pigmentpräparation muss auf das Kolophoniumharz sachgemäß abgestimmt werden. Bei der Herstellung können Wasser sowie alle organischen Lösemittel eingesetzt werden. Geeignete Lösemittel sind z. B. aromatische Lösungsmittel, z.B. Toluole, Benzine, Xylole, Mineralöle, Kohlenwasserstoffe, Ester, langkettige Amine, pflanzliche Öle, einwertige aliphatische Alkohole, wie solche mit 2 bis 4 Kohlenstoffatomen, z.B. Ethanol, Butanol oder Isopropanol oder Ketone, z.B. Aceton oder Methylethylketon oder Glykolether, wie z.B. Propylenglycolmonomethylether, Propylenglycolmonoethylether oder Diole, wie z.B. Ethylenglykol und Propylenglykol oder Polyetherdiole, alipathische Triole und Tetrole mit 2 bis 6 Kohlenstoffatomen, wie Trimethylolethan, Trimethylolpropan, Glycerin, 1,2,4-Butantriol, 1,2,6-Hexantriol und Penta-erythrit, sowie alle anderen Lösemittel anderer Verbindungsklassen bzw. der Gemische der vorgenannten Lösemittel. Vorzugsweise werden solche Lösemittel eingesetzt, die in Karsten, Lackrohstofftabellen, 9. Auflage, 1992, aufgelistet sind.

Die erfindungsgemäßen Pigmentpräparationen auf Wasserbasis oder daraus hergestellte Trockenpräparate enthalten als weitere Komponente ein oder mehrere Neutralisationsmittel. Geeignet sind insbesondere die auf dem Lacksektor üblichen Basen, wie z.B. Harnstoff, Harnstoffderivate, Ammoniak, Aminoalkohole, Alkalihydroxide, wie z.B. KOH oder NaOH, Amine, wobei es sich bevorzugt bei Präparationen für wässrige Anwendungen um nichtflüchtige organische niedermolekulare Amine handelt bzw. um solche, die bei 100 °C eine geringe Flüchtigkeit besitzen.

Die erfindungsgemäße Pigmentpräparation auf Wasserbasis enthält 0,05 bis 10 Gew.% eines Neutralisationsmittels, vorzugsweise 1 bis 7 Gew.%, insbesondere 1,5 bis 3 Gew.%, bezogen auf die Pigmentpräparationen enthalten.

Die erfindungsgemäße Pigmentpräparation kann vorzugsweise in Mengen von 0,05 bis 10 Gew.%, vorzugsweise 0,05 bis 5 Gew.%, insbesondere 0,05 bis 3 Gew.%, als weitere Komponente ein Modifizierungsmittel enthalten. Insbesondere wird als Modifizierungsmittel ein Polyalkylenoxid bzw. Polyalkylenoxid-Derivat eingesetzt um die Festigkeit der Trockengranulate sowie die Kompatibilität zu verbessern. Femer sind als Modifizierungsmittel sphärische Teilchen, Acrylatharze, Maleinatharze, Urethanharze, Nitrocellulose und alle bekannten Cellulosederivate, Polyester, PVC, Polyalkylenglykol, Polyalkylenglykolester und -ether, Emulgatoren, Tenside, Polyacrylat oder Polymethacrylat oder faserförmige Partikel mit einer Faserlänge von 0,1-20 µm, in Mengen von 0,05 bis 10 Gew.%, vorzugsweise 0,05 bis 5 Gew.%, insbesondere 0,05 bis 3 Gew.%, bezogen auf die Pigmentpräparation, geeignet.

Falls erforderlich wird durch Zusatz eines Redispergiermittels in Form von sperrigen Teilchen, wie z.B. Fasern oder sphärischen Partikeln, verhindert, dass die nach dem erfindungsgemäßen Verfahren behandelten Effektpigmente sich auf Grund der sterischen Abstoßung in nennenswertem Umfang aufeinanderlegen und damit eine starke Adhäsion ausüben. Dies bewirkt, dass
1. die erfindungsgemäßen Präparationen stabiler sind, und
2. sich die Effektpigmente nach dem Eintrag der Pigmentpräparation bzw. der daraus hergestellten Trockenpräparate in das Lack-, Druckfarben- oder Farbsystem zum Teil sehr viel langsamer absetzen und das Sediment aber in allen Fällen weniger hart ist, und dass keine Probleme beim Wiederaufrühren des Bodensatzes auftreten.

Das Redispergiermittel wird vorzugsweise in Mengen von 0 bis 5 Gew.%, insbesondere von 0,05 bis 3 Gew.%, bezogen auf die Pigmentpräparation eingesetzt. Alle dem Fachmann bekannten organischen und anorganischen Fasern mit einer Faserlänge von 0,1-20 µm können verwendet werden. Geeignete Partikel sind insbesondere alle Kunstfasern, z.B. aus Polyethylen, Polyacrylaten, Polypropylen, Polyamiden, Cellulosefasern, anorganische Fasern, hier bevorzugt Siliziumverbindungen, Glasfasern sowie insbesondere die Kondensationsprodukte aus modifizierten Isocyanaten und Mono- und Diaminen. Diese Kondensationsprodukte, wobei es sich um Dihamstoffderivate sowie Aminoharnstoffe mit Urethangruppierungen handelt, sind als Thixotropierungsmittel bekannt und werden mit einem Bindemittel Farben und Lacken zugesetzt, um die Ablaufeigenschaften und die Streichbarkeit zu verbessern.

Weiterhin können als Redispergiermittel alle dem Fachmann bekannten Dihamstoffderivate und Urethanverbindungen verwendet werden, wie sie z.B. in der EP 0 198 519 und in Organic Coatings: Science and Technology, A. Heenriga, P.J.G. von Hemsbergen, S. 201-222, New York 1983 beschrieben werden.

Geeignete sphärische Materialien sind insbesondere Glas-, Wachs- oder Polymerhohlkugeln aus Vinylharzen, Nylon, Silikon, Epoxyharzen, Olefinharzen, Polystyrolen sowie anorganische Materialien, wie z.B. TiO₂, SiO₂ oder ZrO₂. Vorzugsweise werden Hohlkugeln, femer auch Vollkugeln, mit einer Teilchengröße von 0,05 bis 150 µm verwendet. Insbesondere bevorzugt werden in der erfindungsgemäßen Pigmentpräparation Glas-, Wachsoder Polymerhohlkugeln eingesetzt.

Sphärische Teilchen auf Basis von SiO₂ in einem Teilchenbereich von 3-10 µm sind z.B. als Materialien für die Hochdruckflüssigkeitschromatographie bekannt und werden z.B. als LiChrospher® von der Fa. Merck KGaA, Darmstadt, BRD, vertrieben. Vorzugsweise werden solche Materialien in monodisperser Form, d.h. mit einer möglichst einheitlichen Teilchengröße, eingesetzt. Bekannt sind solche monodispersen sphärischen Teilchen auf Basis von SiO₂, TiO₂ und ZrO₂. Monodisperses SiO₂ kann beispielsweise nach der EP 0 216 278 B1 hergestellt werden. Glashohlkugeln werden beispielsweise unter dem Handelsnamen Q-CEL von der Fa. PQ Corporation, USA oder Scotchlite von der Fa. 3M, Frankfurt, BRD vertrieben.

Zusätzlich kann die erfindungsgemäße Pigmentpräparation oberflächenaktive Substanzen enthalten, wie z.B. Alkylsilane, die auch eine weitere funktionelle Gruppe enthalten können, ungesättigte oder gesättigte Fettsäuren oder Fluortenside. Insbesondere bevorzugt werden Silanverbindungen der Formel (CₙH₂ₙ₊₁)Si(OCₘH₂ₘ₊₁)₃, worin n 1-30 und m 1-10 bedeutet, als oberflächenaktive Substanzen eingesetzt. Geeignete Silanverbindungen sind beispielsweise n-Hexyldecyltriethoxysilan und n-Octyldecyltriethoxysilan (Si 116 bzw. Si 118 der Degussa AG, Frankfurt) sowie die entsprechenden Fluoralkylsilane.

Ferner können als oberflächenaktive Substanzen die gesättigten und ungesättigten Fettsäuren, wie z.B. Capronsäure, Caprylsäure, Caprinsäure, Laurinsäure, Myristinsäure, Palmitinsäure, Stearinsäure, Ölsäure, Linolsäure sowie Fettsäuregemische eingesetzt werden.

Vorzugsweise enthält die Pigmentpräparation neben dem Silan noch zusätzlich ein Tensid oder eine Fettsäure. Bei dem oberflächenaktiven Reagenz kann es sich auch um ein Gemisch aus Silan, Fettsäuren und/oder Tensiden handeln. Die Pigmentpräparationen können 0,1 bis 5 Gew.%, vorzugsweise 0,2 bis 3 Gew.% und insbesondere 0,5 bis 2 Gew.% an oberflächenaktiven Substanzen bezogen auf das Pigment enthalten.

Die Herstellung der erfindungsgemäßen Pigmentpräparation erfolgt üblicherweise derart, dass man zu dem Effektpigment bzw. Effektpigmentgemisch das modifizierte Kolophoniumharz, in wäßriger oder organischer Lösung, gegebenenfalls ein Modifiziermittel und weitere Additive, gleichzeitig oder nacheinander hinzugibt und man diese Mischung schonend homogenisiert.

Vorzugsweise wird das Pigment vorgelegt und zunächst unter Rühren mit dem Lösemittel enthaltend das Kolophoniumharz (Granulierlösung) und gegebenenfalls bereits das Modifiziermittel, angeteigt; anschließend erfolgt gegebenenfalls die Zugabe einer weiteren Lösung bestehend aus Lösemittel und Additiven.

Der erfindungsgemäßen Pigmentpräparation können während oder nach der Herstellung weitere übliche Additive zugesetzt werden, wie z.B. Entschäumer, Netzmittel, Antiabsetzmittel, Verlaufsmittel, Sikkative oder Thixotropiermittel. Es handelt sich hierbei um in der Lackindustrie übliche Hilfsstoffe, die in der erfindungsgemäßen Pigmentpräparation in einer Menge von 0 bis 10 Gew.% enthalten sein können. Insbesondere sind hier genannt Succinatderivate, z.B. solche wie sie von der Fa. Henkel unter der Marke Hydropalat 875 vertrieben werden.

Bei der erhaltenen erfindungsgemäßen feuchten Pigmentpräparation handelt es sich um ein homogenes Pulver bzw. um gut fließfähige Pasten oder um feuchte Granulate mit einem relativ hohen Gehalt an Effektpigmenten. Granulate, beispielsweise in Kugelform, sind sehr gut fließfähig und leicht zu dosieren und haben bei allen diesen Eigenschaften eine vollständige Freiheit von Staub. Das Volumen dieser Granulate ist reduziert auf ca. 1/3 des Volumens von Perlglanzpigmentpulvern.

Zur Herstellung von Trockenpräparaten wird die erfindungsgemäße Pigmentpräparation stranggepresst oder auf anderen dem Fachmann bekannten Wegen in eine kompakte Teilchenform verdichtet, z. B. durch Tablettieren, Brikettieren, Pelletieren, Granulieren, Sprühgranulieren, Wirbelbettgranulieren oder Extrudieren, und gegebenenfalls anschließend getrocknet. Der Trocknungsprozess findet in der Regel bei Temperaturen von 20 bis 150 °C statt, vorzugsweise bei 60 bis 120 °C, und kann ggf. unter reduziertem Druck erfolgen. Die Trockenpräparate, wie z.B. Granulate, weisen Pigment-gehalte von > 70 Gew.%, vorzugsweise von > 80 Gew.%, auf. Zuletzt wird das Trockenpräparat gegebenenfalls klassiert.

Die Teilchengrößen der Granulate, Pellets, Chips, Briketts, etc. liegen im Bereich von 0,1 bis 150 mm, vorzugsweise 0,1 bis 20 mm, insbesondere 0,1 bis 2 mm.

Die so erhaltenen Trockenpräparate haben gegenüber den erfindungsgemäßen wasser- bzw. lösemittelhaltigen Präparationen nochmals gesteigerte positive Eigenschaften:
- Die Trockenprodukte sind nicht staubend, gut rieselfähig und lassen sich schnell in kommerziell erhältliche Bindemittelsysteme einarbeiten und sind damit kompatibel. Insbesondere sind die Produkte kompatibel sowohl mit wässrigen, lösemittelhaltigen als auch lösemittelfreien Druckfarben und Lacksystemen.
- Die fehlenden flüssigen Komponenten erhöhen die Kompatibilität und zeigen keine Nachteile bei der Benetzung.
- Nach Zugabe der Trockenpräparate zu einem wässrigem Bindemittel oder einem polaren lösemittelhaltigen Bindemittel (Ethanol, Ethylacetat, MEK, etc.) erfolgt schneller Zerfall des Granulats und eine sofortige vollständige Benetzung der Pigmente.
- Weitere Vorteile der Trockenpräparate sind die verbesserte Lagerstabilität, der erleichterte Transport und die verbesserte Produktionssicherheit beim Kunden.

Durch die Integration einer Redispergierhilfe ist gewährleistet, dass die erfindungsgemäßen Pigmentpräparationen auch in den fertigen Lack- und Farbsystemen leicht aufrührbar sind und keiner wesentlichen Verbesserung durch den Endformulierer mehr bedürfen.

Die verbesserte Deagglomeration der Trockenpräparate eingearbeitet in ein Bindemittel, z.B. in eine Druckfarbe, zeigt sich bereits mit geringen Mengen an sphärischen Teilchen in der Pigmentpräparation. So werden bereits bei der Verwendung von Granulaten mit einem Gehalt von 0,5 Gew.% an sphärischen Teilchen bezogen auf das Trockenpräparat die Auflösegeschwindigkeit deutlich erhöht und die Stabilität der Druckfarbe schneller erzielt (Viskosität/Farbton).

Die erfindungsgemäße Präparation als angefeuchtetes Pulver bzw. Paste oder als Trockenpräparat kann für vielfältige Anwendungen verwendet werden. Bevorzugt wird sie in Beschichtungssystemen aus den Bereichen Druck, insbesondere Überdrucklackierung, Offsetüberdrucklackierung, und Tiefdruck, Flexodruck und Siebdruck, eingesetzt. Besonders bevorzugt wird die Präparation bzw. das daraus hergestellte Trockenpräparat als Vorprodukt für Beschichtungsmassen auf beliebige Substratmaterialien, beispielsweise Metalle wie Eisen, Stahl, Aluminium, Kupfer, Bronze, Kunststoff, Messing sowie Metallfolien aber auch Glas, Keramik und Beton, als auch auf Holz, z.B. Möbel, Ton, Textil, Papier, Verpackungsmaterialien, z.B. Kunststoffbehälter, Folien oder Pappen, oder auf anderen Materialien zu dekorativen und/oder schützenden Zwecken aufgebracht.

Gegenstand der Erfindung ist somit auch die Verwendung der Pigmentpräparation und der daraus hergestellten Trockenpräparate in Formulierungen wie Farben, Pulverlacken, Lacken, wie z.B. Industrie- und Automobillacken, Druckfarben, sowie Kunststoffen und Beschichtungsmassen allgemeiner Art.

Die nachfolgenden Beispiele sollen die Erfindung näher erläutern, ohne sie jedoch zu beschränken.

### Beispiele

### Beispiel 1

### 1.1 Herstellung der Granulierlösung

163,5 g 50 °C warmes VE-Wasser werden vorgelegt und 54 g modifiziertes Kolophoniumharz [Säurezahl 168 mg KOH / g Harz, Erweichungspunkt 72 °C, Hydroxylgruppengehalt: 122 mg KOH / g Harz, lodzahl: 67 g lod / 100 g Harz, Viskosität 30 s (65%ige Lösung in Ethanol DIN 4-Cup, 20 °C)] mittels eines 4-Flügelrührers, eingetragen. Anschließend werden 12 g 25%ige Ammoniaklösung langsam zugegeben und so lange gerührt, bis sich das modifizierte Kolophoniumharz vollständig gelöst hat. Danach werden zunächst 163,5 g Wasser und dann 12 g Polyethylenglykol 2000 (Fa. Merck KGaA) unter Rühren zugegeben, zuletzt wird 5 Minuten gerührt.

### 1.2 Herstellung des Granulats

Zur Herstellung des Granulates ist eine gute Durchmischung zu gewährleisten. Die Mischung wird im 1 kg-Maßstab mit Hilfe eines Eirich R02 Mischers hergestellt. 595 g Iriodin® 123 (TiO₂-Glimmerpigment der Teilchengröße 5-20 µm der Fa. Merck KGaA, Deutschland) werden im Mischerbehälter vorgelegt und langsam werden 405 g Granulierlösung aus Beispiel 1.1 zugegeben. Die Mischung wird homogen vermischt. Die angefeuchtete Mischung wird auf einem Granulierteller TR 01 der Fa. Eirich granuliert. Die feuchte, granulierte Mischung wird bei 80 °C und 100 mbar getrocknet. Die getrockneten Granulate werden zunächst über ein Sieb der Maschenweite 2 mm (Grobanteil) und anschließend durch Klassierung über ein 400 µm Sieb der Feinanteil abgetrennt.

Das Produkt ist abriebfest und formstabil und verträglich z.B. mit dem gängigen lösemittelfreien, radikalisch UV-härtenden Rayoflex-Verschnittlack, 11 HF 60 (UV-Lack) der Fa. Hartmann Druckfarben sowie dem lösemittelhaltigen Verschnittlack Haptobond CT 105 (Basis: Nitrocellulose, Lösemittel: Ethanol) der Fa. Hartmann Druckfarben. Zudem zeigt es Verträglichkeit mit dem wässrigen Offset-Überdrucklack 350081 der Weilburger Lackfabrik.

### Beispiel 2

### 2.1 Herstellung der Granulierlösung

163,5 g 50°C warmes VE-Wasser werden vorgelegt und 54 g modifiziertes Kolophoniumharz gemäß Beispiel 1.1, bei 300 U/min. mittels eines 4-Flügelrührers, innerhalb von 1 Minute, eingetragen. Anschließend werden 12 g 25%-ige Ammoniaklösung langsam zugegeben und so lange gerührt, bis sich das modifizierte Kolophoniumharz vollständig gelöst hat. Danach werden zuerst 163,5 g kaltes Wasser und dann 12 g Hydropalat 875 (Na-Salz der Sulfobern-steinsäure der Fa. Henkel) unter Rühren zugegeben und 5 Minuten bei 300 U/min. gerührt.

### 2.2 Herstellung des Granulats

Zur Herstellung des Granulates ist eine gute Durchmischung zu gewährleisten. Die Mischung wird im 1kg-Maßstab mit Hilfe eines Eirich R02 Mischers hergestellt.
Hierzu wird 595 g Iriodin® 123 im Mischerbehälter vorgelegt und langsam 405 g Granulierlösung zugegeben. Die Mischung wird homogen vermischt. Die angefeuchtete Mischung wird auf einem Granulierteller TR 01 der Fa. Eirich granuliert. Die feuchte, granulierte Mischung wird bei 80 °C und 100 mbar getrocknet. Die getrockneten Granulate werden zunächst über ein Sieb der Maschenweite 2 mm (Grobanteil) und anschließend durch Klassierung über ein 400 µm Sieb der Feinanteil abgetrennt.

Das Produkt ist abriebfest und formstabil und verträglich mit dem gängigen lösemittelfreien, radikalisch UV-härtenden Rayoflex-Verschnittlack 11 HF 60, der Fa. Hartmann Druckfarben sowie dem lösemittelhaltigen NC-Verschnittlack Haptobond CT 105 der Fa. Hartmann Druckfarben. Zudem zeigt es Verträglichkeit mit dem wässrigen Offset-Überdrucklack 350081 der Weilburger Lackfabrik.

### Beispiel 3

### 3.1 Herstellung der Granulierlösung

163,5 g 50 °C warmes VE-Wasser werden vorgelegt und 54 g modifiziertes Kolophoniumharz gemäß Beispiel 1.1, bei 300 U/min., mittels eines 4-Flügelrührers, innerhalb von 1 Minute, eingetragen.
Anschließend werden 12 g 25%-ige Ammoniaklösung langsam zugegeben und so lange gerührt, bis sich das Kolophoniumharz vollständig gelöst hat. Danach werden zuerst 163,5 g kaltes Wasser und dann 12 g Polyethylenglykol 2000 unter Rühren zugegeben und 5 Minuten bei 300 U/min. gerührt.

### 3.2 Herstellung des Granulates

Zur Herstellung des Granulates ist eine gute Durchmischung zu gewährleisten. Die Mischung wird im 1kg-Maßstab mit Hilfe eines Eirich R02 Mischers hergestellt.
Hierzu werden 595 g Iriodin® 123 vorgelegt und langsam 405 g Granulierlösung zugegeben. Bei einer Drehzahl von 300-500 U/min. werden außerdem 19,5 g Solcolor Green (Cl PG 7)-Pigmentpräparation der Fa. MK-Chemicals zugesetzt. Die Mischung wird homogen vermischt. Die angefeuchtete Mischung wird auf einem Granulierteller TR 01 der Fa. Eirich granuliert.

Die feuchte, granulierte Mischung wird bei 80 °C und 100 mbar getrocknet. Es resultiert ein grünstichiges Perlglanzgranulat mit interessanten koloristischen Eigenschaften.
Die getrockneten Granulate werden zunächst über ein Sieb der Maschenweite 2 mm (Grobanteil) und anschließend durch Klassierung über ein 400 µm Sieb der Feinanteil abgetrennt.

Das Produkt ist abriebfest und formstabil und verträglich mit dem gängigen lösemittelfreien, radikalisch UV-härtenden Rayoflex-Verschnittlack 11 HF 60, der Fa. Hartmann Druckfarben sowie dem lösemittelhaltigen NC-Verschnittlack Haptobond CT 105 der Fa. Hartmann Druckfarben. Zudem zeigt es Verträglichkeit mit dem wässrigen Offset-Überdrucklack 350081 der Weilburger Lackfabrik.

### Beispiel 4

### 4.1 Herstellung der Granulierlösung

163,5 g 50 °C warmes VE-Wasser werden vorgelegt und 54 g modifiziertes Kolophoniumharz gemäß Beispiel 1.1, bei 300 U/min., mittels eines 4-Flügelrührers eingetragen.
Anschließend werden 12 g 25%-ige Ammoniaklösung langsam zugegeben und so lange gerührt bis sich das modifiziertes Kolophoniumharz vollständig gelöst hat. Danach werden zuerst 163,5 g kaltes Wasser und dann 12 g Hydropalat 875 (Na-Salz der Sulfobern-steinsäure der Fa. Henkel) unter Rühren zugegeben und 5 Minuten bei 300 U/min. gerührt.

### 4.2 Herstellung des Granulates

Zur Herstellung des Granulates ist eine gute Durchmischung zu gewährleisten. Die Mischung wird im 1 kg-Maßstab mit Hilfe des Eirich R02 Mischers hergestellt.
Hierzu werden 595 g Iriodin® 123 im Mischerbehälter vorgelegt und langsam 405 g Granulierlösung zugegeben. Bei einer Drehzahl von 300-500 U/min. werden außerdem 19,5 g Solcolor Gelb (Cl, PY 83)-Pigmentpräparation der Fa. MK-Chemicals zugegeben. Die Mischung wird homogen vermischt.
Die angefeuchtete Mischung wird auf einem Granulierteller TR 01 der Fa. Eirich granuliert. Die feuchte, granulierte Mischung wird bei 80 °C und 100 mbar getrocknet. Es resultiert ein gelbstichiges Perlglanzgranulat, mit interessanten koloristischen Eigenschaften. Die getrockneten Granulate werden zunächst über ein Sieb der Maschenweite 2 mm (Grobanteil) und anschließend durch Klassierung über ein 400 µm Sieb der Feinanteil abgetrennt.

Das Produkt ist abriebfest und formstabil und verträglich mit dem gängigen lösemittelfreien, radikalisch UV-härtenden Rayoflex-Verschnittlack, 11 HF 60 der Fa. Hartmann Druckfarben sowie dem lösemittelhaltigen NC-Verschnittlack Haptobond CT 105 der Fa. Hartmann Druckfarben. Zudem zeigt es Verträglichkeit mit dem wässrigen Offset-Überdrucklack 350081 der Weilburger Lackfabrik.

### Beispiel 5

### 5.1 Herstellung der Granulierlösung

164,5 g Ethanol werden vorgelegt und 54 g modifiziertes Kolophoniumharz gemäß Beispiel 1.1 , bei 300 U/min. mittels eines 4-Flügelrührers eingetragen und bis zur vollständigen Lösung des Kolophoniumharzes gerührt. Danach werden zuerst 164,5 g Ethanol und dann 12 g Polyethylenglykol 2000 unter Rühren zugegeben und 5 Minuten bei 300 U/min. gerührt.

### 5.2 Herstellung des Granulates

Zur Herstellung des Granulates ist eine gute Durchmischung zu gewährleisten. Die Mischung wird im 1kg-Maßstab mit Hilfe des Eirich R02 Mischers hergestellt.
Hierzu werden 595 g Iriodin® 123 im Mischerbehälter vorgelegt und langsam 405 g Granulierlösung zugegeben. Die Mischung wird homogen vermischt. Die angefeuchtete Mischung wird auf einem Granulierteller TR 01 der Fa. Eirich granuliert. Die feuchte, granulierte Mischung wird bei 80 °C und 100 mbar getrocknet. Die getrockneten Granulate werden zunächst über ein Sieb der Maschenweite 2 mm (Grobanteil) und anschließend durch Klassierung über ein 400 µm Sieb der Feinanteil abgetrennt.
Das Produkt ist abriebfest und formstabil und verträglich mit dem gängigen lösemittelfreien, radikalisch UV-härtenden Rayoflex-Verschnittlack, 11 HF 60 der Fa. Hartmann Druckfarben.

Unverträglichkeiten treten jedoch mit folgenden handelsüblichen Verschnittsystemen auf, die auf polaren Lösemitteln basieren:

| Handelsname | Systembasis/Lösemittel | Hersteller |
|---|---|---|
| Haptobond F 105 | Nitrocellulose/Ethanol | Hartmann Druckfarben |
| Haptobond CT 105 | Nitrocellulose/Ethanol | Hartmann Druckfarben |
| Senolith 350081 | Styrolacrylatdispersion | Weilburger Lackfabrik |

### Beispiel 6 (Vergleich 1)

### 6.1 Herstellung der Granulierlösung

164,5 g 50 °C warmes VE-Wasser werden vorgelegt und 54 g modifiziertes Kolophoniumharz mit einer Säurezahl von 175 mg KOH / g Harz, einem Erweichungspunkt von 144 °C (6 min-Wert Kofler-Heizbank), einem Hydroxylgruppengehalt von 160 mg KOH / g Harz, einer lodzahl von 88 g / 100 g Harz und einer Viskosität von 122 s (60%ige Lösung in Ethanol DIN 4-Cup, 20 °C, da 65%ige Lösung in Ethanol DIN 4-Cup nicht meßbar), bei 300 U/min., mittels eines 4-Flügelrührers eingetragen.
Anschließend werden 12,6 g 25%-ige Ammoniaklösung langsam zugegeben und so lange gerührt bis sich das modifizierte Kolophoniumharz vollständig gelöst hat. Danach werden zuerst 162,2 g kaltes Wasser und dann 12 g Polyethylenglykol 2000 unter Rühren zugegeben und 5 Minuten bei 300 U/min. gerührt.

### 6.2 Herstellung des Granulates

Zur Herstellung des Granulates ist eine gute Durchmischung zu gewährleisten. Die Mischung wird im 1kg-Maßstab mit Hilfe des Eirich R02 Mischers hergestellt.
Hierzu werden 595 g Iriodin® 123 im Mischerbehälter vorgelegt und langsam 405 g Granulierlösung zugegeben. Die Mischung wird homogen vermischt. Die angefeuchtete Mischung wird auf einem Granulierteller TR 01 der Fa. Eirich granuliert. Die feuchte, granulierte Mischung wird bei 80 °C und 100 mbar getrocknet. Die getrockneten Granulate werden zunächst über ein Sieb der Maschenweite 2 mm (Grobanteil) und anschließend durch Klassierung über ein 400 µm Sieb der Feinanteil abgetrennt.

Das Produkt ist abriebfest und formstabil, zeigt jedoch Unverträglichkeiten mit folgenden handelsüblichen Verschnittsystemen, die auf polaren Lösemitteln basieren bzw. lösemittelfrei sind:

| Handelsname | Systembasis/Lösemittel | Hersteller |
|---|---|---|
| Haptobond F 105 | Nitrocellulose/Ethanol | Hartmann Druckfarben |
| Haptobond CT 105 | Nitrocellulose/Ethanol | Hartmann Druckfarben |
| Senolith 350081 | Styrolacrylatdispersion | Weilburger Lackfabrik |
| Rayoflex 11 HF 60 | radikalisch härtendes UV-System/Acrylat-Oligo/Monomere | Hartmann Druckfarben |
| 95 PA 010-B | Polyvinylbutyral/Ethanol | Gebrüder Schmidt |
| 90 EH 010-EVP | Polyvinylchlorid/Ethylmethylketon | Gebrüder Schmidt |

## Patentansprüche

1. Nichtstaubende homogene Pigmentpräparation, **dadurch gekennzeichnet, dass** sie
- ≥ 40 Gew. % eines oder mehrerer Effektpigmente,
- 0,5 - 59,5 Gew. % eines modifizierten Kolophoniumharzes mit einer Säurezahl von 90 - 200 mg KOH / g Harz, einem Hydroxylgruppengehalt von 40 - 180 mg KOH / g Harz und einem Erweichungsbereich von 50 - 120 °C, und
- 0,5 - 50 Gew. % Wasser oder eines Lösemittels oder Lösemittelgemisches
bezogen auf die Pigmentpräparation
enthält.

2. Nichtstaubende homogene Pigmentpräparation nach Anspruch 1, **dadurch gekennzeichnet, dass** das Kolophoniumharz Malein- und Fumarsäure-modifiziert ist.

3. Nichtstaubende homogene Pigmentpräparation nach Anspruch 1, **dadurch gekennzeichnet, dass** das Kolophoniumharz ganz oder teilweise verestert ist.

4. Nichtstaubende homogene Pigmentpräparation nach einem der Ansprüche 1 bis 3, **dadurch gekennzeichnet, dass** sie zusätzlich 0,05 - 10 Gew.% eines Neutralisationsmittels enthält.

5. Nichtstaubende homogene Pigmentpräparation nach einem der Ansprüche 1 bis 4, **dadurch gekennzeichnet, dass** sie zusätzlich 0,05 - 10 Gew.% eines Modifizierungsmittels enthält.

6. Nichtstaubende homogene Pigmentpräparation nach einem der Ansprüche 1 bis 5, **dadurch gekennzeichnet, dass** das Effektpigment ein Perlglanzpigment und/oder ein mit ein oder mehreren Metalloxiden beschichtetes SiO₂-Plättchen ist.

7. Nichtstaubende homogene Pigmentpräparation nach einem der Ansprüche 1 bis 6, **dadurch gekennzeichnet, dass** das Perlglanzpigment ein TiO₂/Glimmer- oder Fe₂O₃/Glimmerpigment ist.

8. Nichtstaubende homogene Pigmentpräparation nach Anspruch 6, **dadurch gekennzeichnet, dass** das SiO₂-Plättchen mit TiO₂ und/oder Fe₂O₃ beschichtet ist.

9. Nichtstaubende homogene Pigmentpräparation nach einem der Ansprüche 1 bis 8, **dadurch gekennzeichnet, dass** sie als zusätzliche Komponenten Entschäumer, oberflächenaktive Substanzen, Netzmittel, Antiabsetzmittel, Verlaufsmittel, Sikkative und/oder Thioxotropiermittel enthält.

10. Verwendung der Pigmentpräparation nach Anspruch 1 in Formulierungen wie Farben, Lacken, Pulverlacken, Druckfarben und in Kunststoffen.

11. Verwendung der Pigmentpräparation nach Anspruch 1 zur Herstellung von Trockenpräparaten, wie Granulate, Briketts, Chips und Pellets.

12. Trockenpräparate hergestellt aus der nichtstaubenden homogenen Pigmentpräparation nach Anspruch 1, indem die Formgebung der Trockenpräparate durch Tablettieren, Brikettieren, Pelletieren, Wirbelschichtgranulieren, Granulieren, Sprühgranulieren oder Extrudieren erfolgt, und die Präparate gegebenenfalls vom Lösemittel befreit werden.

13. Verwendung der Trockenpräparate nach Anspruch 12 in Formulierungen wie Farben, Lacken, Pulverlacken, Druckfarben und Kunststoffen.

## Claims

1. Non-dusting homogeneous pigment preparation, **characterised in that** it comprises
- ≥40% by weight of one or more effect pigments,
- 0.5 - 59.5% by weight of a modified colophony resin having an acid number of 90 - 200 mg of KOH/g of resin, a hydroxyl group content of 40 - 180 mg of KOH/g of resin and a softening range of 50 - 120°C, and
- 0.5 - 50% by weight of water or a solvent or solvent mixture,
based on the pigment preparation.

2. Non-dusting homogeneous pigment preparation according to Claim 1, **characterised in that** the colophony resin has been modified by means of maleic acid and fumaric acid.

3. Non-dusting homogeneous pigment preparation according to Claim 1, **characterised in that** the colophony resin has been fully or partially esterified.

4. Non-dusting homogeneous pigment preparation according to one of Claims 1 to 3, **characterised in that** it additionally comprises 0.05 - 10% by weight of a neutraliser.

5. Non-dusting homogeneous pigment preparation according to one of Claims 1 to 4, **characterised in that** it additionally comprises 0.05 - 10% by weight of a modifier.

6. Non-dusting homogeneous pigment preparation according to one of Claims 1 to 5, **characterised in that** the effect pigment is a pearlescent pigment and/or an SiO₂ flake coated with one or more metal oxides.

7. Non-dusting homogeneous pigment preparation according to one of Claims 1 to 6, **characterised in that** the pearlescent pigment is a TiO₂/mica or Fe₂O₃/mica pigment.

8. Non-dusting homogeneous pigment preparation according to Claim 6, **characterised in that** the SiO₂ flake is coated with TiO₂ and/or Fe₂O₃.

9. Non-dusting homogeneous pigment preparation according to one of Claims 1 to 8, **characterised in that** it comprises, as additional components, antifoams, surface-active substances, wetting agents, antisettling agents, flow-control agents, siccatives and/or thixotropic agents.

10. Use of the pigment preparation according to Claim 1 in formulations, such as paints, coatings, powder coatings, printing inks and in plastics.

11. Use of the pigment preparation according to Claim 1 for the preparation of dry preparations, such as granules, briquettes, chips and pellets.

12. Dry preparations prepared from the non-dusting homogeneous pigment preparation according to Claim 1 by carrying out the shaping of the dry preparations by tableting, briquetting, pelleting, fluidised-bed granulation, granulation, spray granulation or extrusion, and, if necessary, freeing the preparations from the solvent.

13. Use of the dry preparations according to Claim 12 in formulations, such as paints, coatings, powder coatings, printing inks and plastics.

## Revendications

1. Préparation pigmentaire homogène sans poussière, **caractérisée en ce qu'**elle contient
- ≥ 40 % en poids d'un ou plusieurs pigments à effet spécial,
- 0,5 à 59,5 % en poids d'une résine de colophane modifiée ayant un indice d'acide compris entre 90 et 200 mg KOH/g de résine, une teneur en groupes hydroxyle comprise entre 40 et 180 mg KOH/g de résine et un intervalle de ramollissement compris entre 50 et 120°C, et
- 0,5 à 50 % en poids d'eau ou d'un solvant ou d'un mélange de solvants,
rapporté à la préparation pigmentaire.

2. Préparation pigmentaire homogène sans poussière, selon la revendication 1, caractérisée en que la résine de colophane est modifiée par les acides maléique et fumarique.

3. Préparation pigmentaire homogène sans poussière selon la revendication 1, **caractérisée en ce que** la résine de colophane est estérifiée totalement ou partiellement.

4. Préparation pigmentaire homogène sans poussière selon l'une des revendication 1 à 3, **caractérisée en ce qu'**elle contient en plus 0,05 % à 10 % en poids d'un agent neutralisant.

5. Préparation pigmentaire homogène sans poussière selon l'une des revendications 1 à 4, **caractérisée en ce qu'**elle contient en plus 0,05 à 10 % en poids d'un agent modifiant.

6. Préparation pigmentaire homogène sans poussière selon l'une des revendications 1 à 5, **caractérisée en ce que** le pigment à effet spécial est un pigment nacré et/ou des lamelles de SiO₂ revêtues d'un ou plusieurs oxydes métalliques.

7. Préparation pigmentaire homogène sans poussière selon l'une des revendications 1 à 6, **caractérisée en ce que** le pigment nacré est un pigment de TiO₂/mica ou de Fe₂O₃/mica.

8. Préparation pigmentaire homogène sans poussière selon la revendications 6, **caractérisée en ce que** la lamelle de SiO₂ est revêtue de TiO₂ et/ou de Fe₂O₃.

9. Préparation pigmentaire homogène sans poussière selon l'une des revendications 1 à 8, **caractérisée en ce qu'**elle contient comme composants additionnels des agents antimoussants, des substances tensio-actives, des agents mouillants, des agents inhibiteurs de sédimentation, des produits nivelants, des siccatifs et/ou des agents thixotropes.

10. Utilisation de la préparation pigmentaire selon la revendication 1 dans les formulations telles que peintures, vernis, vernis en poudre, encres d'imprimerie et dans les matières plastiques.

11. Utilisation de la préparation pigmentaire selon la revendication 1 pour la fabrication de préparations sèches telles que granulés, briquettes, pastilles et pellets.

12. Préparations sèches fabriquées à partir de la préparation pigmentaire homogène sans poussière selon la revendication 1, la mise en forme des préparations sèches étant effectuée par pastillage, briquetage, pelletisation, granulation en lit fluidisé, granulation, granulation par pulvérisation ou extrusion et éventuellement en débarrassant les préparations du solvant.

13. Utilisation des préparations sèches selon la revendication 12 dans les formulations telles que peintures, vernis, vernis en poudre, encres d'imprimerie et matières plastiques.
